Europäisches Patentamt

European Patent Office

Office européen des brevets

(19)

(11) EP 0 690 587 A1

(12) **DEMANDE DE BREVET EUROPEEN**

(43) Date de publication:
03.01.1996 Bulletin 1996/01

(51) Int Cl.⁶: **H04B 1/707**

(21) Numéro de dépôt: 95401549.1

(22) Date de dépôt: 28.06.1995

(84) Etats contractants désignés:
**DE ES GB IT NL SE**

(30) Priorité: 30.06.1994 FR 9408069

(71) Demandeur: **ALCATEL TELSPACE**
**F-92734 Nanterre Cédex (FR)**

(72) Inventeurs:
• Thebault, Bertrand
  **F-35360 Montauban de Bretagne (FR)**
• Sehier, Philippe
  **F-92300 Levallois Perret (FR)**

(74) Mandataire: **Scheer, Luc et al**
**F-75008 Paris (FR)**

(54) **Acquisition de synchronisation temporelle entre une séquence d'étalement d'un récepteur et celle d'un émetteur**

(57)    L'invention concerne un procédé de recherche d'acquisition de synchronisation temporelle entre une séquence d'étalement d'un récepteur et une séquence d'étalement d'un émetteur. Le récepteur reçoit un signal étalé et effectue une démodulation de ce signal à l'aide de sa séquence d'étalement.

Le procédé comprend une étape de test consistant à :

a- mesurer l'énergie du signal démodulé en l'intégrant pendant un intervalle de temps $Tobs_i$, et com-parer l'énergie avec une valeur de seuil afin d'indiquer si la valeur de seuil est dépassée, pour une hypothèse de décalage temporel donnée entre les séquences d'étalement, et à

b- modifier l'hypothèse de décalage temporel si la valeur de seuil n'est pas dépassée et incrémenter la valeur d'un compteur.

Les étapes a et b sont répétées jusqu'à ce que la valeur du compteur atteigne une valeur prédéterminée.

Selon l'invention, lorsque la valeur prédéterminée est atteinte, on remplace l'intervalle de temps $Tobs_i$ par un intervalle de temps $Tobs_{i+1}$, avec $Tobs_{i+1} = m.Tobs_i$ et $m > 1$, et on reprend le procédé à l'étape a en rempla-çant $Tobs_i$ par $Tobs_{i+1}$, le procédé prenant fin lorsque la valeur prédéterminée a été atteinte un nombre k de fois prédéterminé.

L'invention s'applique à la réception de signaux éta-lés dont on ne connaît pas le rapport signal à bruit.

**Description**

La présente invention concerne un procédé de recherche d'acquisition de synchronisation temporelle entre une séquence d'étalement d'un récepteur et celle d'un émetteur. Elle s'applique notamment dans les systèmes de télécommunications à étalement de spectre par évasion de fréquence ou par codage pseudo-aléatoire d'un signal source transmis à un récepteur.

Une opération d'étalement de spectre peut soit consister à multiplier le signal utile à transmettre d'un émetteur vers un récepteur par un code, appelé séquence d'étalement ou séquence directe, issu d'un générateur pseudo-aléatoire, soit en effectuant de l'évasion de fréquence, c'est à dire en modifiant de manière pseudo-aléatoire la fréquence de la porteuse du signal transmis. L'évasion de fréquence peut notamment s'effectuer sur un signal déjà étalé par une séquence d'étalement.

Le récepteur d'un signal dont le spectre a été étalé doit pouvoir synchroniser son générateur de séquence d'étalement avec celui de l'émetteur pour que le signal utile puisse être extrait du signal reçu. Cette fonction de recherche de synchronisation des séquences d'étalement est mise en oeuvre dans les phases d'acquisition de synchronisation temporelle, par exemple à l'établissement d'une communication. Lorsque la synchronisation est obtenue, l'intercorrélation des séquences d'étalement de l'émetteur et du récepteur est théoriquement égale à 1.

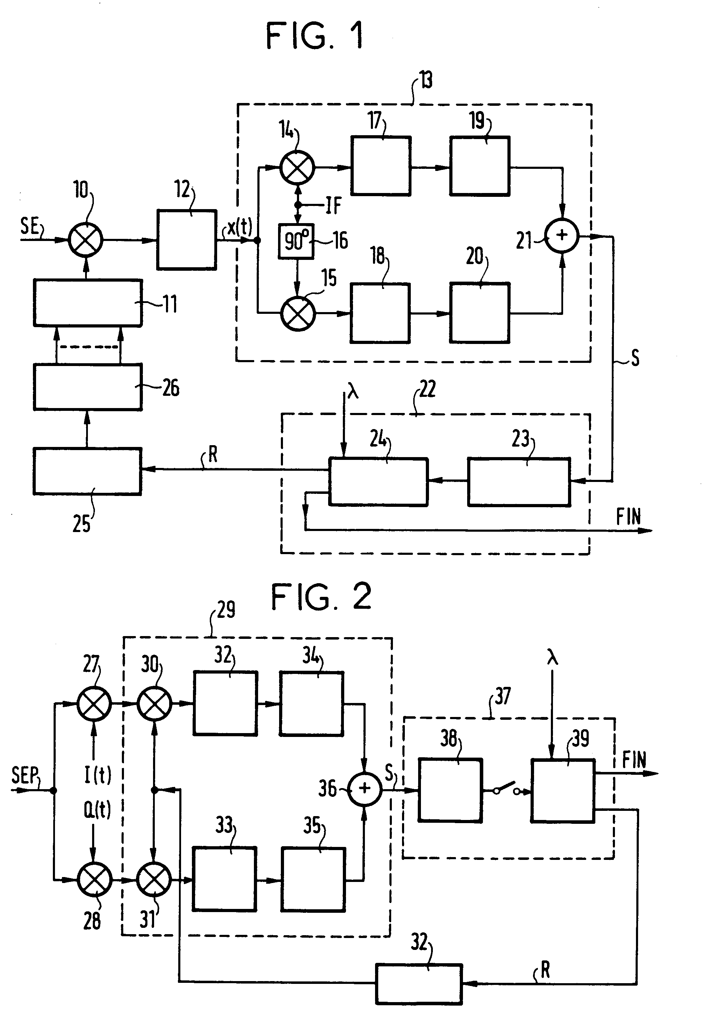

La figure 1 est un schéma synoptique d'un récepteur connu recevant un signal étalé par évasion de fréquence.

Un signal SE étalé par évasion de fréquence est appliqué à l'entrée d'un mélangeur large bande 10 recevant également un signal d'un synthétiseur de fréquence 11. Le signal de sortie du mélangeur 10 est appliqué à un filtre 12 en fréquence intermédiaire fournissant un signal x(t) à un étage 13 de démodulation non cohérent. Le signal x(t) est ici un signal à pluralités de phases, par exemple de type MDP-4. L'étage 13 comporte deux mélangeurs 14, 15 recevant le signal x(t) et deux signaux en quadrature de phase (déphaseur de 90° référencé 16) à la fréquence intermédiaire du filtre 12. Les signaux de sortie des mélangeurs 14, 15 sont appliqués à des filtres passe-bas 17, 18 suivis de modules 19, 20 assurant une élévation au carré des signaux qui leur sont appliqués. Les signaux de sortie des modules 19, 20 sont additionnés par un sommateur 21 dont le signal de sortie constitue un signal démodulé S indicatif de la puissance du signal reçu démodulé et appliqué à un étage 22 de détection d'acquisition de synchronisation. L'étage 22 comporte des moyens d'intégration 23 du signal démodulé S, fournissant une grandeur indicative de l'énergie comprise dans le signal reçu démodulé, suivis par des moyens 24 de comparaison de cette énergie avec une valeur de seuil λ. Si l'énergie mesurée par les moyens 23 est supérieure à la valeur de seuil λ, un signal FIN indique que l'acquisition de synchronisation est obtenue. Si par contre cette énergie est inférieure à λ, les moyens de comparaison génèrent un signal de commande R de décalage d'un signal issu d'une horloge 25. L'horloge 25 pilote un générateur 26 de séquence d'étalement fournissant au synthétiseur de fréquence 11 un signal de commande lui indiquant quelle doit être la fréquence du signal appliqué au mélangeur 10.

La figure 2 est un schéma synoptique d'un récepteur connu recevant un signal étalé par codage pseudo-aléatoire d'un signal source transmis à ce récepteur.

Un signal SEP étalé par codage pseudo-aléatoire d'un signal source transmis à ce récepteur est ici constitué par une porteuse modulée par deux signaux en quadrature de phase. Le signal SEP est appliqué à l'entrée de deux mélangeurs 27, 28 large bande recevant également des signaux de démodulation I(t), Q(t) constituant une fréquence de transposition en bande de base. Les signaux de sortie de ces mélangeurs 27, 28 sont appliqués à un étage 29 de démodulation non cohérent comportant en entrée deux mélangeurs 30 et 31 recevant une séquence d'étalement d'un générateur de séquence d'étalement 32. Les signaux de sortie des mélangeurs 30 et 31 sont appliqués à des filtres passe-bas 32 et 33 suivis chacun d'un module 34, 35 assurant une élévation au carré des signaux qui leur sont appliqués. Les signaux de sortie des modules 34 et 35 sont additionnés par un sommateur 36 dont le signal de sortie constitue un signal démodulé S indicatif de la puissance du signal reçu démodulé et appliqué à un étage 37 de détection d'acquisition de synchronisation. L'étage 37 comporte des moyens d'intégration 38 du signal démodulé, fournissant une grandeur indicative de l'énergie comprise dans ce signal reçu démodulé, suivis, après échantillonnage, par des moyens 39 de comparaison de cette énergie avec une valeur de seuil λ. Si l'énergie mesurée par les moyens 39 est supérieure à la valeur de seuil λ, un signal FIN indique que l'acquisition de synchronisation est obtenue. Si par contre cette énergie est inférieure à λ, les moyens de comparaison génèrent un signal de commande R de décalage temporel de la séquence issue du générateur 32.

Dans les récepteurs des figures 1 et 2, on effectue donc une mesure d'énergie du signal reçu démodulé appliqué aux entrées des filtres 17, 18 et 32, 33. A cause du bruit affectant toute liaison hertzienne, il est nécessaire de définir un seuil de corrélation λ au-delà duquel on considérera que la synchronisation est obtenue. Ce seuil est fonction du rapport signal à bruit (S/B) affectant la liaison de transmission et de la durée d'intégration. Comme il n'est pas possible de déterminer le rapport S/B sans synchronisation préalable des séquences d'étalement (le signal utile n'est pas extractible du signal reçu), le seuil de corrélation λ est établi à partir du bilan de liaison établi préalablement par estimations. On établit ainsi un seuil de corrélation minimal correspondant à un rapport S/B minimal de la liaison et également à une durée d'intégration minimale. Cette durée d'intégration doit être la plus faible possible pour permettre une acquisition de synchronisation rapide alors qu'une durée d'intégration importante a l'avantage de diminuer les risques de fausse détection de synchronisation (faux accrochages) dus au bruit.

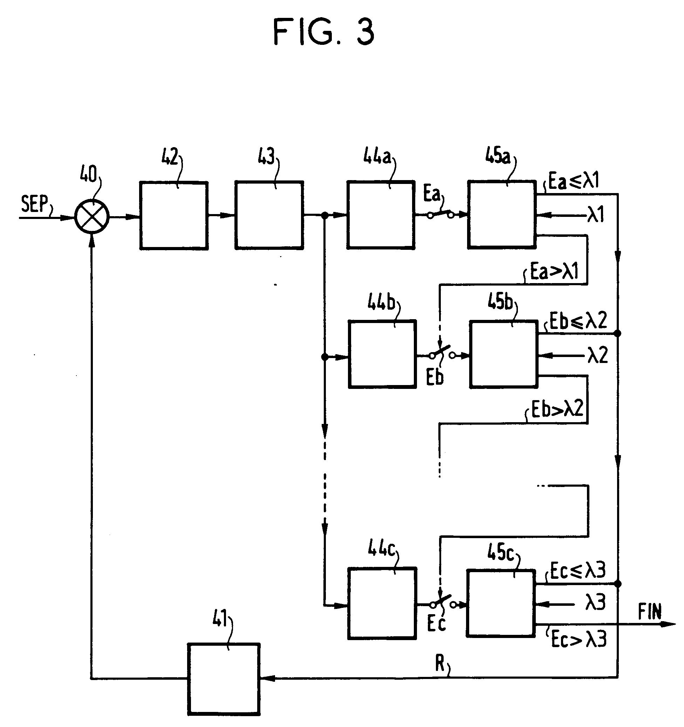

Il existe par ailleurs un système de détection d'acquisition de synchronisation, tel que décrit à la page 44 du volume 3 de la collection Spread Spectrum Communications, de M.K. SIMON, J.K. OMURA, R.A. SCHOLTZ et B.K. LEVITT, Computer Science Press, et intitulé "The multiple dwell serial PN acquisition system" (Système d'acquisition série à rampes multiples), tel que décrit en référence à la figure 3.

Sur cette figure est représenté un système de détection d'acquisition de synchronisation appliqué à un signal dont le spectre a été étalé par codage pseudo-aléatoire d'un signal source. Le signal reçu SEP est appliqué à un mélangeur 40 recevant également une séquence d'étalement locale d'un générateur de séquence d'étalement 41. Le signal de sortie du mélangeur 40 est appliqué à un filtre passe-bande 42 suivi par un détecteur d'enveloppe 43 effectuant une élévation au carré du signal qui lui est appliqué. Le signal de sortie du détecteur 43 est appliqué à une pluralité d'intégrateurs 44a à 44c fournissant chacun une énergie Ea, Eb, Ec. Les durées d'intégration sont croissantes, c'est à dire que la durée d'intégration dans l'intégrateur 44c est supérieure à celle de l'intégrateur 44b, elle même supérieure à celle de l'intégrateur 44a. Les énergies détectées sont successivement appliquées à des comparateurs 45a, 45b, 45c recevant des valeurs de seuil $\lambda 1$, $\lambda 2$, $\lambda 3$. Si l'énergie Ea fournie par l'intégrateur 44a est supérieure à la valeur de seuil $\lambda 1$, on confirme cette détection d'acquisition de synchronisation en appliquant à l'entrée du comparateur 45b l'énergie Eb détectée par l'intégrateur 44b. En revanche, si l'énergie Ea est inférieure ou égale à la valeur de seuil $\lambda 1$, on génère un signal de commande R de décalage temporel de la séquence issue du générateur 41. Le fonctionnement est le même pour les comparateurs 45b et 45c, sauf que si le comparateur 45c indique que l'énergie Ec est supérieure au seuil $\lambda 3$, le système génère un signal de sortie FIN indiquant que la synchronisation est acquise.

Le principe appliqué ici est donc de ne considérer la synchronisation comme acquise que si plusieurs passes successives, consistant à intégrer pendant des durées croissante l'énergie du signal démodulé et à comparer les énergies résultantes avec des valeurs de seuil, indiquent que la synchronisation est acquise. Les durées d'intégration et les valeurs des seuils dépendent du rapport S/B attendu, déterminé à partir du bilan de liaison. Implicitement, lorsqu'un nombre d'échecs donné est atteint, les mesures cessent et il est indiqué que la recherche d'acquisition de synchronisation n'a pas donné de résultat.

Le principal inconvénient de ces principes de détection de synchronisation est que si le rapport S/B effectif de la liaison est supérieur à celui déterminé par le bilan de liaison, par exemple du fait des changements des conditions atmosphériques, le temps d'acquisition ne sera pas écourté pour autant, seule la fiabilité sera meilleure. En conséquences, on ne tire pas profit d'un meilleur rapport S/B que celui prévu d'après le bilan de liaison.

De plus, dans un milieu de transmission brouillé, la recherche de synchronisation peut être très longue puisqu'on va effectuer de multiples intégrations pour chaque hypothèse de décalage temporel, même si les tests suivant ces intégrations indiquent que les valeurs de seuil correspondantes ne sont pas atteintes.

La présente invention a pour objectif de remédier à ces inconvénients.

Plus précisément, un des objectifs de l'invention est de fournir un procédé de recherche rapide de synchronisation temporelle d'un système de transmission à étalement de spectre, par séquence d'étalement ou par évasion de fréquence, permettant d'effectuer une telle recherche malgré une incertitude importante du rapport S/B.

Un objectif complémentaire de l'invention est de fournir un tel procédé où le temps d'acquisition de synchronisation est écourté si le rapport S/B s'améliore, c'est à dire un temps d'acquisition qui soit une fonction décroissante du rapport S/B.

Ces objectifs, ainsi que d'autres qui apparaîtront par la suite, sont atteints grâce à un procédé de recherche d'acquisition de synchronisation temporelle entre une séquence d'étalement d'un récepteur et une séquence d'étalement d'un émetteur, le récepteur recevant un signal étalé et effectuant une démodulation de ce signal à l'aide de la séquence d'étalement du récepteur, le procédé comprenant une étape de test consistant à :

a- mesurer l'énergie du signal démodulé en l'intégrant pendant un intervalle de temps $Tobs_i$, et comparer cette énergie avec une valeur de seuil afin d'indiquer si la valeur de seuil est dépassée, pour une hypothèse de décalage temporel donnée entre les séquences d'étalement, et à

b- modifier l'hypothèse de décalage temporel si la valeur de seuil n'est pas dépassée et incrémenter la valeur d'un compteur ;

le procédé consistant à répéter les étapes a et b jusqu'à ce que la valeur du compteur atteigne une valeur prédéterminée, le procédé de l'invention étant remarquable en ce que lorsque la valeur prédéterminée est atteinte, on remplace l'intervalle de temps Tobsi par un intervalle de temps $Tobs_{i+1}$, avec $Tobs_{i+1} = m.Tobs_i$ et $m > 1$, et on reprend le procédé à l'étape a en remplaçant Tobsi par $Tobs_{i+1}$, le procédé prenant fin lorsque cette valeur prédéterminée a été atteinte un nombre k de fois prédéterminé.

Ainsi, l'invention propose d'effectuer plusieurs étapes constituées chacune d'au moins une passe (intégration suivie d'une comparaison avec une valeur de seuil), les durées d'intégration d'une étape à la suivante étant croissantes. On peut ainsi débuter avec une durée d'intégration très courte (correspondant à une hypothèse d'un rapport S/B élevé) qui sera dans la première étape testée pour des hypothèses de décalage temporel différentes. Si aucune hypothèse n'est la bonne, le procédé de recherche reprend avec une durée d'intégration plus longue, et ainsi de suite jusqu'à ce que la synchonisation est obtenue.

Le principal avantage de procéder ainsi est que la synchronisation est obtenue plus rapidement que dans l'état de la technique si le rapport S/B est plus favorable que celui établi préalablement par le bilan de liaison.

Dans un mode de mise en oeuvre avantageux, l'étape -a- est constituée par plusieurs passes successives, chaque passe consistant à mesurer l'énergie du signal démodulé en l'intégrant pendant un intervalle de temps et à comparer cette énergie avec une valeur de seuil afin d'indiquer si la valeur de seuil est dépassée, les durées d'intégration étant croissantes d'une passe à la suivante et une passe de rang n étant effectuée si la passe de rang n-1 indique que l'énergie mesurée pendant cette passe est supérieure à la valeur de seuil correspondante.

Préférentiellement, les durées d'intégration sont disjointes dans le temps. La durée de deux passes successives est alors augmentée mais on augmente également la fiabilité puisque les mesures d'énergie ne sont pas corrélées.

Le procédé de l'invention peut indifféremment être appliqué à un récepteur fonctionnant en étalement de spectre par évasion de fréquence ou à un récepteur fonctionnant en étalement de spectre par codage pseudo-aléatoire d'un signal source transmis à ce récepteur.

D'autres caractéristiques et avantages de l'invention apparaîtront à la lecture de la description suivante d'un mode de mise en oeuvre préférentiel et des dessins annexés dans lesquels :

- la figure 1 est un schéma synoptique d'un récepteur connu recevant un signal étalé par évasion de fréquence ;

- la figure 2 est un schéma synoptique d'un récepteur connu recevant un signal étalé par codage pseudo-aléatoire d'un signal source transmis à ce récepteur ;

- la figure 3 représente un système de détection d'acquisition de synchronisation à plusieurs passes appliqué à un signal dont le spectre a été étalé par codage pseudo-aléatoire d'un signal source ;

- la figure 4 est un organigramme représentant un mode de mise en oeuvre préférentiel du procédé de l'invention.

Les figures 1 à 3 ont été décrites précédemment en référence à l'état de la technique.

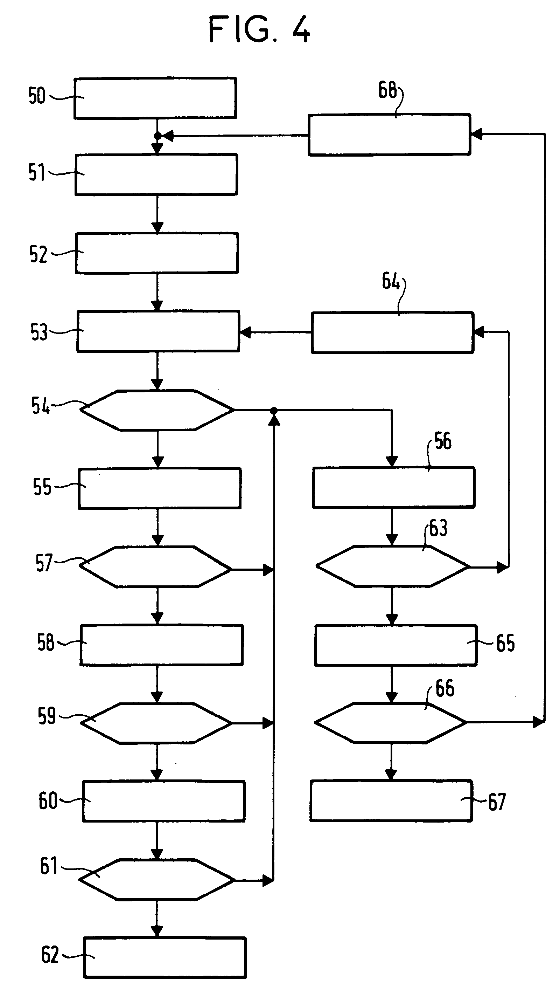

La figure 4 est un organigramme représentant un mode de mise en oeuvre préférentiel du procédé de l'invention.

L'invention repose sur l'hypothèse que le signal reçu et dont le spectre a été étalé présente un rapport S/B supérieur à un certain seuil. Cette hypothèse peut être qualifiée d'optimiste.

A l'étape 50, une variable i est initialisée à la valeur 0. La variable i représente une étape de traitement pour une pluralité d'hypothèses de décalage de la séquence d'étalement du récepteur par rapport à celle de l'émetteur et est compris dans un intervalle [0, k]. A l'étape 51, une variable h est initialisée à la valeur 0. La variable h représente le nombre d'hypothèses de décalage qui seront effectuées pour chaque valeur de i et h est compris dans un intervalle [0, q]. A l'étape 52, on se fixe une origine des temps en effectuant $\tau = \tau_0$. La valeur de $\tau$ est comprise dans un intervalle $[\tau_0, \tau_h]$. A l'étape 53, l'énergie du signal démodulé S est mesurée pendant un temps d'observation $Tobs_{i1}$ qui est un multiple entier de la période de la séquence d'étalement. On calcule ainsi l'énergie $E_{i1}$ suivante :

$$E_{i1} = \int_0^{Tobs_{i1}} S \, dt$$

où S est le signal appliqué à l'entrée de l'étage de détection d'acquisition de synchronisation.

A l'étape 54, on compare l'énergie $E_{i1}$ avec une valeur de seuil $\lambda_{i1}$ pour réaliser un test élémentaire. Si $E_{i1}$ est inférieur à $\lambda_{i1}$, il ne peut y avoir de synchronisation des séquences et on passe à l'étape 56. En revanche, si $E_{i1}$ est supérieur à $\lambda_{i1}$, il se peut que les séquences soient synchronisées, à moins que le dépassement de la valeur de seuil ne soit dû à du bruit, et on passe à l'étape 55 qui consiste à mesurer l'énergie du signal démodulé pendant un temps d'observation $Tobs_{i2} > Tobs_{i1}$ avec par exemple $Tobs_{i2} = n.Tobs_{i1}$ et n>1 non nécessairement entier. On calcule ainsi l'énergie $E_{i2}$ suivante :

$$E_{i2} = \int_{Tobs_{i1}}^{Tobs_{i1}+Tobs_{i2}} S \, dt$$

L'énergie $E_{i2}$ est en principe supérieure à l'énergie $E_{i1}$ puisque le temps d'intégration est plus long. On notera que les intervalles de temps d'intégration sont préférentiellement disjoints pour ne pas fausser la mesure en prenant en compte l'énergie mesurée pendant $Tobs_{i1}$ qui peut provenir du bruit. Ceci permet d'obtenir une fiabilité améliorée de la détection de synchronisation par rapport à l'état de la technique. Les intervalles de temps sont préférentiellement jointifs pour des raisons de simplicité de mise en oeuvre.

A l'étape 57, on compare l'énergie $E_{i2}$ avec une valeur de seuil $\lambda_{i2}$ pour réaliser un second test élémentaire. La valeur de seuil $\lambda_{i2}$ est supérieure à la valeur de seuil $\lambda_{i1}$, ce qui correspond à une demande de confirmation des étapes 53 et 54. Si l'énergie $E_{i2}$ est inférieure à $\lambda_{i2}$, il ne peut y avoir de synchronisation des séquences et on passe à l'étape 56. Si par contre l'énergie $E_{i2}$ est supérieure à $\lambda_{i2}$, la probabilité que les séquences soient synchronisées augmente. On a ainsi réalisé une première passe correspondant aux étapes 53 et 54, suivie par une autre passe correspondant aux étapes 55, 57.

On peut ensuite effectuer une nouvelle passe pour confirmer les précédentes, en mesurant l'énergie du signal S sur une durée plus importante. Dans le chronogramme de la figure 3, deux passes successives sont effectuées :

- à l'étape 58, on mesure l'énergie $E_{i3}$ égale à :

$$E_{i3} = \int_{Tobs_{i1}+Tobs_{i2}}^{Tobs_{i1}+Tobs_{i2}+Tobs_{i3}} S \, dt$$

avec $Tobs_{i3} > Tobs_{i2}$ et par exemple $Tobs_{i3} = n.Tobs_{i2}$ et on compare, à l'étape 59, l'énergie $E_{i3}$ avec une valeur de seuil $\lambda_{i3}$ ;

- à l'étape 60, on mesure l'énergie $E_{i4}$ égale à :

$$E_{i4} = \int_{Tobs_{i1}+Tobs_{i2}+Tobs_{i3}}^{Tobs_{i1}+Tobs_{i2}+Tobs_{i3}+Tobs_{i4}} S \, dt$$

avec $Tobs_{i4} > Tobs_{i3}$ et par exemple $Tobs_{i4} = n.Tobs_{i3}$ et on compare, à l'étape 61, l'énergie $E_{i4}$ avec une valeur de seuil $\lambda_{i4}$.

On réalise ainsi des tests de synchronisation successifs sur des intervalles de temps disjoints et de durées croissantes. En cas d'échec d'un des tests on passe à l'étape 56, alors que si le dernier test est positif, on déclare, à l'étape 62, que la synchronisation des séquences est obtenue pour l'hypothèse de décalage $\tau$ considérée.

A l'étape 56, on effectue $h = h+1$ et à l'étape 63 on teste si h est égal à q. Si la réponse est non, on passe à l'étape 64 où une nouvelle hypothèse de décalage $\tau_h$ est adoptée. La séquence d'étalement du récepteur est alors décalée et le procédé reprend à l'étape 53. La valeur de q est importante et vaut par exemple 1000.

L'invention telle qu'exposée jusqu'ici correspond au mode de fonctionnement du dispositif de la figure 3 à cela près que les intervalles d'intégration sont disjoints.

On peut définir comme constituant une étape de test le fait d'effectuer les actions suivantes :

a- mesurer l'énergie du signal démodulé en intégrant le signal démodulé pendant un intervalle de temps $Tobs_i$, et comparer cette énergie avec une valeur de seuil afin d'indiquer si la valeur de seuil est dépassée, pour une hypothèse de décalage temporel donnée entre les séquences d'étalement, et à

b- modifier l'hypothèse de décalage temporel si la valeur de seuil n'est pas dépassée et incrémenter la valeur d'un compteur,

et répéter les étapes a et b jusqu'à ce que la valeur du compteur atteigne une valeur prédéterminée.

L'invention propose ensuite, si la réponse au test de l'étape 63 est oui, de passer à l'étape 65 où on effectue $i = i+1$. A l'étape 66, on teste si i est égal à k. La valeur de k est par exemple égale à 4. Si la réponse est non, on passe à une étape 68 où le temps d'observation $Tobs_i$ est augmenté d'un facteur m supérieur à 1. Cela revient à écrire :

$$Tobs_{i+1} = m.Tobs_i$$

La valeur de m n'est pas nécessairement entière. Dans un mode de réalisation préférentiel, m vaut 2. Le procédé reprend alors à l'étape 51 et toutes les durées d'intégration préalablement définies sont augmentées d'un facteur m.

Si la réponse au test 66 est oui, l'étape 67 marque la fin de la recherche de synchronisation. Après l'étape 67, on peut par exemple reprendre le processus depuis son début en adoptant une nouvelle valeur de $\tau$.

Ainsi, le procédé de l'invention consiste à ajouter à l'unique étape de traitement de l'état de la technique, k-1 autres étapes suivantes. Chaque étape de traitement comporte une ou plusieurs passes, effectuées en parallèle ou à la succession les unes des autres, les durées d'intégration augmentant d'une étape à la suivante.

L'invention repose donc sur le principe consistant à effectuer, pour la première étape de traitement, une hypothèse d'un rapport S/B élevé, par exemple de l'ordre de 10 dB. Si la valeur q est atteinte, c'est à dire si toutes les passes de la première étape indiquent qu'il n'y a pas de synchronisation des séquences d'étalement, une deuxième étape de traitement est lancée avec une ou plusieurs durées d'intégration de durées plus importantes.

Bien entendu, le procédé de l'invention s'applique également dans le cas où les durées d'intégration présentent un recouvrement, comme expliqué en référence à la figure 3. L'invention s'applique dans le cas où une étape de traitement comporte plusieurs passes, mais également lorsqu'une étape de traitement ne comporte qu'une passe unique (53, 54).

Dans le cas où les étapes de traitement comportent chacune plusieurs passes, l'accroissement de durée d'intégration d'une passe à la suivante est par exemple de 4 (n=4).

Afin d'optimiser la durée globale de deux passes successives, il est préférable de prendre $TobS_{i+1} = 2.Tobs_i$ et de déterminer le seuil $\lambda_{i1}$ de la première passe de telle manière que pour le plus petit rapport signal à bruit envisageable à cette passe, $pfa_{i1} = 1/16$.

La probabilité de faux accrochage de la passe suivante, $pfa_{i2}$ peut être de l'ordre de $10^{-5}$, donc beaucoup plus faible, pour q = 1000.

L'invention convient particulièrement aux systèmes de transmission à faibles rapports S/B. Elle s'applique aux récepteurs comportant des étages de démodulation cohérents ou non cohérents. Elle permet de réduire le temps d'acquisition de synchronisation moyen d'un facteur important lorsque le rapport S/B est meilleur que celui escompté. Le principal avantage est que la recherche de synchronisation est effectuée plus rapidement que dans l'état de la technique car les hypothèses de décalage non pertinentes peuvent être analysées pendant de brefs intervalles de temps.

La valeur de la durée d'intégration de la première passe et les coefficients m et n sont déterminés en fonction de la probabilité de fausse alarme et de détection et du rapport S/B minimum. L'invention s'applique notamment lorsque la puissance du signal utile reçu n'est pas connue.

## Revendications

1. Procédé de recherche d'acquisition de synchronisation temporelle entre une séquence d'étalement d'un récepteur et une séquence d'étalement d'un émetteur, ledit récepteur recevant un signal étalé et effectuant une démodulation de ce signal à l'aide de ladite séquence d'étalement dudit récepteur, ledit procédé comprenant une étape de test consistant à :

   a- mesurer (53, 55, 58, 60) l'énergie du signal démodulé en l'intégrant pendant un intervalle de temps $Tobs_i$, et comparer (54, 57, 59, 61) ladite énergie avec une valeur de seuil afin d'indiquer si ladite valeur de seuil est dépassée, pour une hypothèse de décalage temporel ($\tau$) donnée entre lesdites séquences d'étalement, et à

   b- modifier ladite hypothèse de décalage temporel ($\tau$) si ladite valeur de seuil n'est pas dépassée et incrémenter (56) la valeur d'un compteur ;

   ledit procédé consistant à répéter les étapes a et b jusqu'à ce que la valeur dudit compteur atteigne une valeur prédéterminée,
   caractérisé en ce que lorsque ladite valeur prédéterminée est atteinte, ledit procédé consiste à remplacer (68) ledit intervalle de temps Tobsi par un intervalle de temps $Tobs_{i+1}$, avec $Tobs_{i+1} = m.Tobs_i$ et m > 1, et à reprendre ledit procédé à l'étape a en remplaçant Tobsi par $Tobs_{i+1}$, ledit procédé prenant fin (67) lorsque ladite valeur prédéterminée a été atteinte un nombre k de fois prédéterminé.

2. Procédé selon la revendication 1, caractérisé en ce que l'étape a est constituée par plusieurs passes successives (53, 54; 55, 57; 58, 59; 60, 61), chaque passe consistant à mesurer l'énergie du signal démodulé en l'intégrant pendant un intervalle de temps, et à comparer ladite énergie avec une valeur de seuil afin d'indiquer si ladite valeur de seuil est dépassée, les durées d'intégration étant croissantes d'une passe à la suivante, une passe de rang n étant effectuée si la passe de rang n-1 indique que l'énergie mesurée pendant cette passe est supérieure à la valeur de seuil correspondante.

3. Procédé selon la revendication 2, caractérisé en ce que lesdites durées d'intégration sont disjointes dans le temps.

4. Procédé selon l'une des revendications 1 à 3, caractérisé en ce qu'il est appliqué à un récepteur fonctionnant en étalement de spectre par évasion de fréquence.

5. Procédé selon l'une des revendications 1 à 3, caractérisé en ce qu'il est appliqué à un récepteur fonctionnant en étalement de spectre par codage pseudo-aléatoire d'un signal source transmis à ce récepteur.

# FIG. 1

# FIG. 2

# FIG. 3

# FIG. 4

**Office européen des brevets**

## RAPPORT DE RECHERCHE EUROPEENNE

Numero de la demande

EP 95 40 1549

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE TRANSACTIONS ON COMMUNICATIONS, vol. COM-31, no. 5, Mai 1983 NEW YORK US, pages 650-659, DICARLO ET AL 'Multiple Dwell Serial Search: Performance and Application to Direct Sequence Code Acquisition' * page 651, colonne de gauche, ligne 3 - page 652, colonne de gauche, ligne 6; figures 1,2 * ----- | 1,2,5 | H04B1/707 |

**DOMAINES TECHNIQUES RECHERCHES (Int.Cl.6)**

H04B

Le présent rapport a été établi pour toutes les revendications

| Lieu de la recherche | Date d'achèvement de la recherche | Examinateur |
|---|---|---|
| LA HAYE | 29 Août 1995 | Bossen, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)